# EUROPEAN PATENT APPLICATION

(11) **EP 3 009 937 A1**
(43) Date of publication of application: **20.04.2016**
(21) Application number: 13886715.5
(22) Date of filing: 12.06.2013
(51) Int. Cl.: G06F 12/00

(54) **CONTROL MONITORING SYSTEM AND CONTROL MONITORING METHOD**

(71) Applicant: Hitachi, Ltd., Chiyoda-ku Tokyo 100-8280 (JP)
(72) Inventor: YOKOTA, Daisuke, Tokyo 100-8280 (JP); SHIMIZU, Katsuhito, Tokyo 100-8280 (JP); KAMEDA, Takayuki, Tokyo 100-8280 (JP)
(74) Representative: MERH-IP Matias Erny Reichl Hoffmann Patentanwälte PartG mbB
(86) International application number: PCT/JP2013/066262
(87) International publication number: WO 2014/199472

(57) **Abstract**

In response to an increase in data access from an information system to a control system and cooperation with multiple control systems, a workload for realizing cooperation processing and a corresponding workload for changing a configuration of a controller of the control system are increased.

By using an identifier of a control target model of the control system, a gateway server is disposed for identifier management, access control, performance management in the cooperation with multiple control systems, and a change range is automated and localized when the control systems are cooperated and a configuration of the controller of the control system is changed.

## Description

### Technical Field

The present invention relates to a control monitoring system and a control monitoring method and especially relates to communication and information sharing between a server and a controlled device.

### Background Art

A method for information distribution control has been investigated which can facilitate efficient data distribution in a system in response to an increase in data access from an information system to a control system. According to the method, it is complicated that the information system understands a state in the control system, such as which redundant devices actually control, and accesses data. Therefore, a method is proposed in which a gateway server understands the state in the middle and relays data access, and consequently data can be accessed from an information system in the same method even if a device actually performing the control is switched.

### Citation List

### Patent Literature

PTL 1: JP 2009-042995 A

### Summary of Invention

### Technical Problem

To save time to establish a system for cooperating with an information system and a control system and to establish a system for cooperating with control systems each other, the followings are needed: a method for accessing information stored in a control monitoring system, management of an access right, securing of processing performance to realize existing control of the control monitoring system, and reduction in load on information disclosure by the control monitoring system.

Further, in the case where multiple systems are cooperated, for example, in a control system appointed as a controller by a server, the server obtains information on a controller of another system, and in cooperation which directly directs control, it takes much time to manage and design an identifier of the controller, an access right, control process and securing of performance before the cooperation.

### Solution to Problem

In a control system, a configuration and a parameter of the control system is changed by a technique such as computer performance as at the time of establishment of the system. However, the configuration and the parameter of the control system are not depending on the control system. Meanwhile, a control target is modeled such as computer integrated manufacturing (CIM), and an application can be written under a parameter name of a control target, not an identifier of a controller and a sensor.

Therefore, a gateway is disposed which comprehensively manages a correspondence relation between an identifier and a controller by using an identifier of a control target, not by using an identifier of the controller in cooperation with an information system and a control system and in cooperation with control systems each other. The gateway performs access control, performance management, identifier sharing, and internal configuration change in addition to identifier conversion. In this case, the gateway aggregates access rights, performance, and access and conceals addition/omission of a controller.

The above-described problem can be solved by a control monitoring system. The control monitoring system includes a server device, a gateway device, and a controlled device. The server device receives a command. The gateway device is connected to the server device and generates a second request message based on a first request message from the server device. The controlled device is connected to the gateway device via a control monitoring network and generates a second response message based on the second request message when receiving the second request message from the gateway device. The gateway device includes a request database and a process database. The request database records a relation between a request source server and a request destination controlled device. The process database records data received from the controlled device. The gateway device records the second response message in the process database when receiving the second response message from the controlled device, refers to the request database, searches a corresponding server device, generates a first response message addressed to the searched server device, and transmits the first response message to the searched server device.

Further, the above-described problem can be solved by a control monitoring method in a control monitoring system. The control monitoring system includes a server device, a gateway device, and a controlled device. The server device receives a command. The gateway device is connected to the server device and generates a second request message based on a first request message from the server device. The controlled device is connected to the gateway device via a control monitoring network and generates a second response message based on the second request message when receiving the second request message from the gateway device. The gateway device includes a request database and a process database. The request database records a relation between a request source server and a request destination controlled device. The process database records data received from the controlled device. The control monitoring method includes a step of recoding the second response message in the process database when the gateway devices receives the second response message from the controlled device, a step of referring to the request database and searching a corresponding server device, a step of generating a first response message addressed to the searched server device, and a step of transmitting the generated first response message to the searched server device.

### Advantageous Effects of Invention

According to the above-described processing, when an information system cooperates with a control monitoring system and when control systems cooperate with each other, an application can be implemented without setting an identifier of a controller which measures a parameter to be controlled and without writing processing of access right management, performance management, addition/omission of a controller.

### Brief Description of Drawings

[FIG. 1] FIG. 1 is a block diagram of a control monitoring system.
[FIG. 2] FIG. 2 is a functional block diagram of a controller.
[FIG. 3] FIG. 3 is another functional block diagram of the controller.
[FIG. 4] FIG. 4 is a block diagram of a human machine interface (HMI) device and the controller.
[FIG. 5] FIG. 5 is a functional block diagram of the HMI device.
[FIG. 6] FIG. 6 is a format of a message from the HMI device to a gateway (GW) device.
[FIG. 7] FIG. 7 is a format of a message from the GW device to the HMI device.
[FIG. 8] FIG. 8 is a format of data included in a message between the HMI device and the GW device.
[FIG. 9] FIG. 9 is a functional block diagram of the GW device.
[FIG. 10] FIG. 10 is a format of a message from the GW device to the controller.
[FIG. 11] FIG. 11 is a diagram describing a name system database (NS-DB).
[FIG. 12] FIG. 12 is a diagram describing a request DB.
[FIG. 13] FIG. 13 is a diagram describing a process DB (PDB).
[FIG. 14] FIG. 14 is a diagram describing a performance DB.
[FIG. 15] FIG. 15 is a format of a message from the controller to the GW device.
[FIG. 16] FIG. 16 is a format of data included a message between the GW device and the controller.
[FIG. 17] FIG. 17 is a sequence diagram describing general processing among the HMI device, the GW device, and the controller.
[FIG. 18] FIG. 18 is a sequence diagram describing start-up processing between the GW device and the controller.

### Description of Embodiments

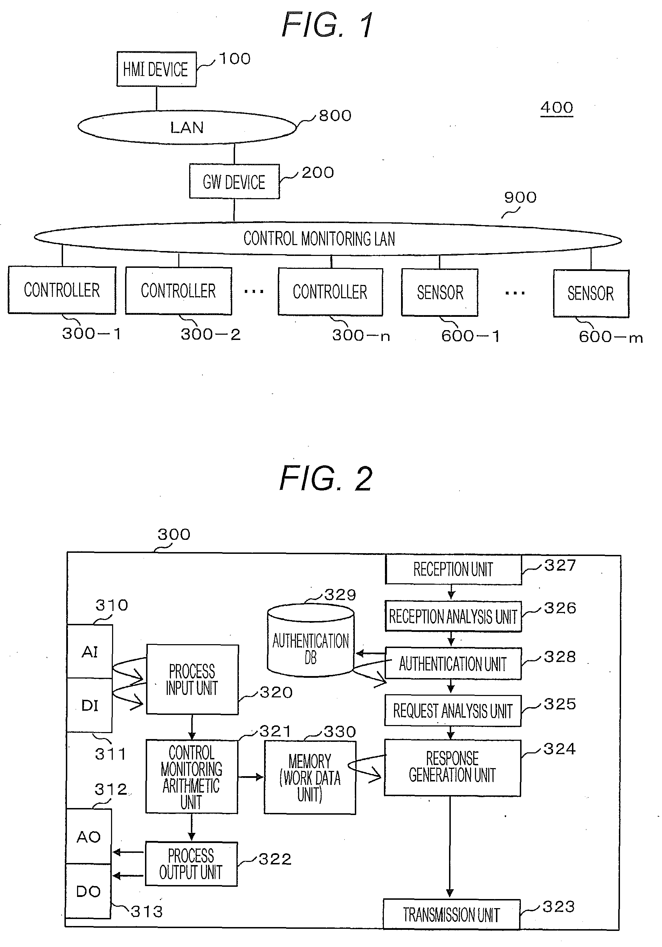

Hereinafter, embodiments of the present invention will be described in detail with reference to FIGS. 1 through 18.

With reference to FIG. 1, a configuration of a control monitoring system will be described. In FIG. 1, a control monitoring system 400 includes an HMI device 100, a local area network (LAN) 800, a GW device 200, a control monitoring LAN 900, a controller 300, and a sensor 600. The control monitoring system 400 includes n controllers 300 and m sensors 600.

The LAN 800 is a network to which the HMI device 100 is connected. The controller 300 and the sensor 600 are targets to be monitored by the HMI device 100. The control monitoring LAN 900 is a network through which the controller 300 and the sensor 600 communicate each other. The GW device 200 relays communication between the LAN 800 and the control monitoring LAN 900. The HMI device 100 may be called a server device.

With reference to FIG. 2, configurations of the controller 300 and the sensor 600 will be described. The controller 300 will be described below. However, the sensor 600 has the same configuration. In the description of the present invention, the controller 300 and the sensor 600 are collectively called a controlled device.

The controller 300 includes an analog input (AI) 310, a digital input (DI) 311, an analog output (AO) 312, a digital output (DO) 313, a process input unit 320, a control monitoring arithmetic unit 321, a process output unit 322, a reception unit 327, a reception analysis unit 326, an authentication unit 328, a request analysis unit 325, a response generation unit 324, a transmission unit 323, a memory (word data unit) 330, and an authentication database (DB) 329.

The AI 310 is an interface for measuring a state of an actual measurement target by using an analog value. The DI 311 is an interface for measuring the state by using a digital value. The AO 312 is an interface which controls an actual measurement target by outputting an analog value thereto. The DO 313 is an interface which controls the target by outputting a digital value thereto. The process input unit 320 obtains data of the AI 310 and the DI 311 in a predetermined sampling period.

The control monitoring arithmetic unit 321 computes the obtained data, performs control based on the data, and stores the data in a memory. The process output unit 322 outputs an analog value and a digital value to a measurement target through the AO 312 and the DO 313 in accordance with an instruction from the control monitoring arithmetic unit 321. The reception unit 327 receives a request message B of the GW device 200 from the control monitoring LAN 900. The reception analysis unit 326 analyzes the request message B. The authentication unit 328 determines whether to process the request message B by whether a name of the HMI device, a writing request data address, and a reading request data address are arbitrarily combined in the authentication DB 329. The authentication unit 328 registers, to the authentication DB 329, an arbitrary combination of the name of an authenticated HMI device, the writing request data address, and the reading request data address which are notified from the GW device 200.

The request analysis unit 325 analyses each request of each of a writing request data address 915 and a reading request data address 916 which are stored in the request message B. The response generation unit 324 writes and reads to the memory 330 in accordance with the request and generates a response message B to the GW device 200. The transmission unit 323 transmits a response message B to the control monitoring LAN 900. The memory 330 stores data from the control monitoring arithmetic unit 321.

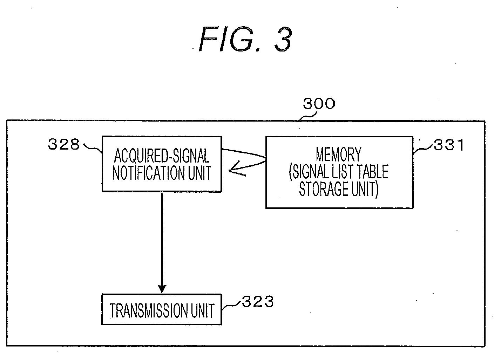

With reference to FIG. 3, a process configuration will be described in which the controller 300 and the sensor 600 notify a name of data stored therein to the GW device 200. As with FIG. 2, the process configuration is described as a configuration of the controller 300. However, the sensor 600 has the same configuration.

In FIG. 3, the controller 300 includes an acquired signal notification unit 328, the transmission unit 323, and a memory (signal list table storage unit) 331.

The acquired signal notification unit 328 acquires a data name stored therein from the memory (signal list table storage unit) 331 and generates a message to be notified, such as when a system is started up. The transmission unit 323 transmits the message to the control monitoring LAN 900. The memory 331 stores, in a list form, a data name stored therein, specifically a signal of such as a measurement value, a control value, and an internal state.

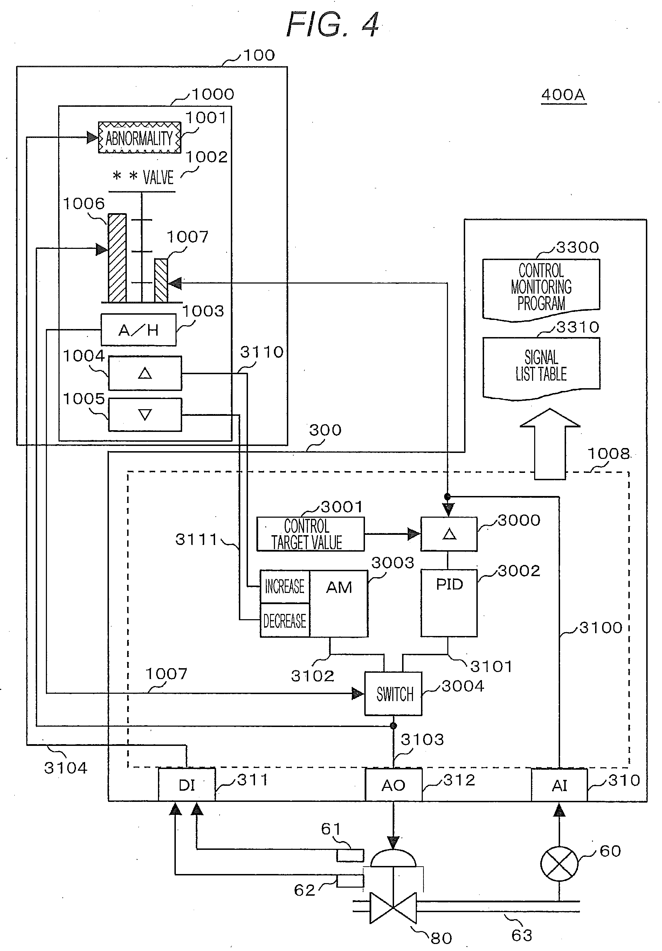

With reference to FIG. 4, a configuration of another control monitoring system will be described. In a control monitoring system 400A illustrated in FIG. 4, descriptions of such as the LAN 800, the GW device 200, and the control monitoring LAN 900 are omitted.

In FIG. 4, a control target of the control monitoring system 400A is a liquid flow rate of a pipe 63, a valve 80 for adjusting a flow rate, a flow meter 60 for measuring a flow rate, and a full open sensor 61 for detecting a state in which the valve 80 is fully opened, and a full close sensor 62 for detecting a state in which the valve 80 is fully closed. These control targets are controlled by a display operation unit 1000 which is provided by the HMI device 100 via the controller 300. The control targets are called a main machine.

The controller 300 includes a control arithmetic processing model 1008, a digital input unit (DI) 311, an analog input unit (AI) 310, and an analog output unit (AO) 312.

The control arithmetic processing model 1008 further includes a control target value 3001, an analog memory (AM) 3003, a switching unit 3004, a proportional integral differentiate/derivative (PID) control unit 3002, and an automatic flow rate control unit 3000.

The controller 300 performs an arithmetic computation to realize the control arithmetic processing model 1008 as an arithmetic computation in the control monitoring arithmetic unit 321. The control monitoring arithmetic unit 321 includes a control monitoring program 3300 in which a method for processing the control arithmetic processing model 1008 is written. A switching unit 3004 stores whether the controller 300 performs an automatic control by using the control target value 3001 or performs a manual control by operation from an operator, and switches input to a control output value 3103. In the case where the controller 300 performs a manual control, the manual control output value analog memory 3003 stores a manual control output value 3102 input by the operation switching unit 3004. In the case where the controller 300 performs an automatic control, the PID control unit 3002 stores an automatic control output value 3101 input by the operation switching unit 3004. The automatic flow rate control unit 3000 increases and reduces a value of the PID control unit 3002 so that the value becomes the control target value 3001 with respect to a flow rate measurement value 3100 which is a measurement value of the flow meter 60.

The display operation unit 1000 includes an abnormality display 1001, a control target name (A/H: Auto/Hand) 1002, a control output display 1006, a flow rate measurement display 1007, a switching operation unit 1003, a manual control output value increase unit 1004, and a manual control output value reduction unit 1005.

The abnormality display 1001 indicates abnormality. The control target name 1002 is a name of an operation target valve. The control output display 1006 displays the control output value 3103. The flow rate measurement display 1007 indicates the flow rate measurement value 3100. The switching operation unit 1003 switches the operation switching unit 3004 to a manual operation or an automatic operation. The manual control output value increase unit 1004 increases a value of the manual control output value analog memory 3003. The manual control output value reduction unit 1005 decreases a value of the manual control output value analog memory 3003.

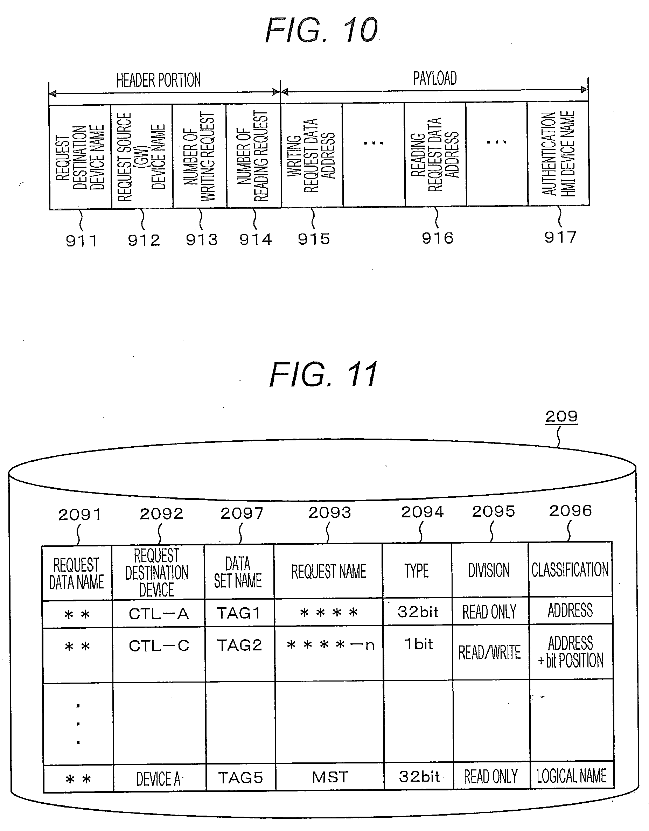

Each item of the control arithmetic processing model 1008 is uniquely named in a system. Items included in the control arithmetic processing model 1008 are (1) a data name, (2) an address of a portion where the memory (work data unit) 330 of the controller 300 is actually stored, and an address + bit position or a logical name which can be identified by the controller 300 indicating the address, (3) a type and a size on a memory such as 32 bit or 1 bit as a type storing the memory 330, and (4) a division 2095 (to be described in FIG. 11) of read and write or both of them of the value as processing which may be performed by the HMI device 100 and the GW device 200. The item list is called a signal list table 3310 and stored in the memory (signal list table storing unit) 331.

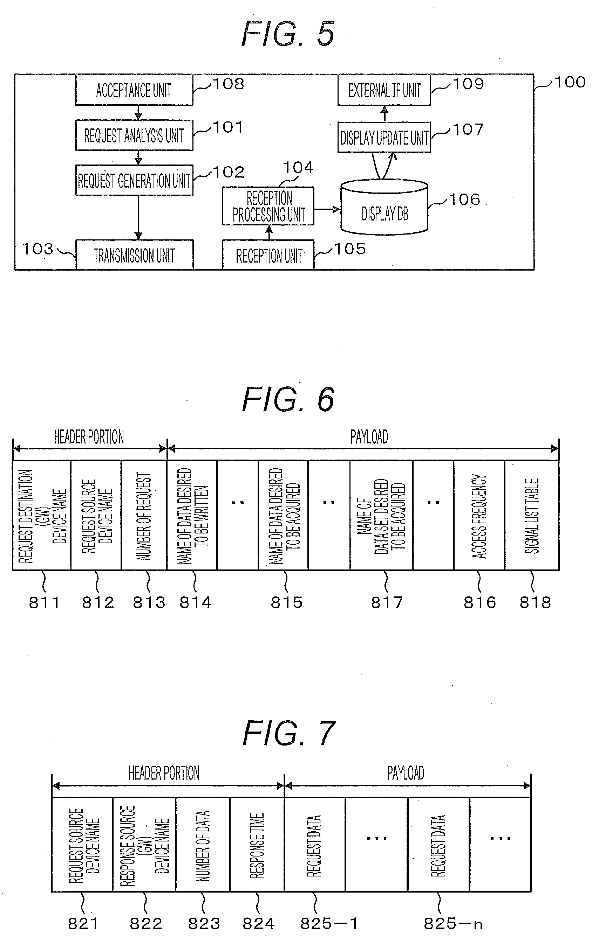

With reference to FIG. 5, an HMI device will be described. In FIG. 5, the HMI device 100 includes an acceptance unit 108, a request analysis unit 101, a request generation unit 102, a transmission unit 103, a reception processing unit 104, a reception unit 105, a display DB 106. a display update unit 107, and an external IF unit 109.

The acceptance unit 108 accepts an instruction from an operator. The request analysis unit 101 analyzes a request from an operator. The request generation unit 102 generates a request message A for a communication transmitting a request to the GW device 200. The transmission unit 103 transmits the request message A to the LAN 800. The reception processing unit 104 processes a response message A. The reception unit 105 receives the response message A for communication of such as a response from a controller. The display DB 106 stores display information to be displayed to an operator as a result of processing of the response message A. The display update unit 107 updates a display by extracting display information from the display DB 106. The external IF unit 109 transmits the display information to a display device.

The acceptance unit 108 includes an input device in which an operation by an operator can be input and an interface device with the input device. Specifically, the acceptance unit 108 includes such as a switch, a keyboard, and a mouse, and an interface device. The request analysis unit 101 analyzes, from an input by the acceptance unit 108, how an operator operates a control monitoring system. The HMI device 100 analyzes whether the request analysis unit 101 inputs in an operation processing by the display operation unit 1000.

With reference to FIG. 6, the request message A to be transmitted from the HMI device 100 to the GW device 200 will be described. In FIG. 6, the request message A includes a header portion and a payload. The header portion of the request message A includes a request destination (GW) device name 811, a request source device name 812, and the number of requests 813. The request destination (GW) device name 811 is a name of a device which is a transmission destination of the request message A. The request source device name 812 is a name of a device which is a transmission source of the request message A. The number of requests 813 is the number of requests included in the request message A.

A payload of the request message A includes a name of data desired to be written 814, a name of data desired to be acquired 815, an access frequency 816, a name of a data set desired to be acquired 817, and a signal list table 318.

In the case where a plurality of data is collectively acquired, and a plurality of data is measured at the same time, the name of a data set desired to be acquired 817 is requested under a data set name which can identify a plurality of data. The signal list table 318 stores the signal list table 3310 when the signal list table 3310 is transmitted.

Each of the name of data desired to be written 814, the name of data desired to be acquired 815, and the name of a data set desired to be acquired 817 may be plural. The access frequency 816 includes contents capable of calculating loads of the control monitoring LAN 900 and the controller 300, such as the number of requests per unit time and a throughput. A plurality of the access frequencies 816 may be appointed to the request message A in the case where the frequency is changed depending on a time. Specifically, if the access frequency differs in a time zone from 13:00 to 14:00 in a day, the access frequency in the time zone and the access frequency in other time zone are included. Further, the access frequency 816 may be separately appointed for each of the name of data desired to be written 814, the name of data desired to be acquired 815, and the name of a data set desired to be acquired 817. In other words, a write frequency, an acquisition frequency, or frequencies different for each of a plurality of data desired to be acquired may be appointed. The name of data desired to be written 814 includes a data name and a data value desired to be written. Further, the name of data desired to be written 814, the name of data desired to be acquired 815, and the name of a data set desired to be acquired 817 may include a type and a specification of data and a signal for writing and acquiring, such as an extensible markup language (XML) format or a data schema specified in IEC61850.

The request destination device name 811 and the request source device name 812 are a host name or an IP address in the case where the LAN 800 is an IP network.

The request generation unit 102 stores a device name of the GW device 200 set in advance in the request destination device name 811 and stores a device name of the HMI device 100 in the request source device name 812. The request generation unit 102 also stores an acquisition request or a writing request with respect to a name of each item in the control arithmetic processing model 1008 in the name of data desired to be written 814, the name of data desired to be acquired 815, and the name of a data set desired to be acquired 817. The request generation unit 102 stores a value set in advance to the access frequency 816. Specifically, when acquiring the control output value 3103 to be used in the control output display 1006 (FIG. 4), the request generation unit 102 sets from a display update frequency of the control output display 1006.

With reference to FIG. 7, the request message A received from the GW device 200 by the HMI device 100 will be described. In FIG. 7, the response message A includes a header portion and a payload. The header of the response message A includes a request source device name 821, a response source (GW) device name 822, the number of data 823, and a response time 824.

The request source device name 821 is a name of a device which has requested the response message A. The response source (GW) device name 822 is a name of a device which has responded to the response message A. The number of data 823 is the number of responses included in the response message A. The response time 824 is a time at which the response message A is responded.

In the payload of the response message A, request data 825 which is data corresponding to the name of a data set desired to be acquired 815 is included by the number of responses (n responses).

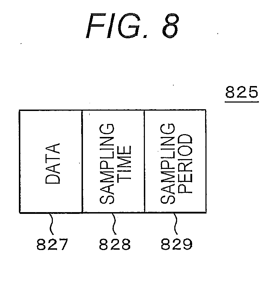

With reference to FIG. 8, specific contents of the request data 825 will be described. In FIG. 8, the request data 825 includes data 827, a sampling time 828, and a sampling period 829.

The data 827 is data corresponding to a data name such as the name of data desired to be acquired 815. The sampling time 828 is a time at which the data 827 is acquired. The sampling period 829 is a period in which the data 827 is acquired.

The reception processing unit 104 of the HMI device 100 (FIG. 5) stores the request data 825 of the response message A in the display DB 106. The display update unit 107 changes a display by using the stored request data 825. Specifically, the display update unit 107 changes the abnormality display 1001, the control output display 1006, and the flow rate measurement display 1007, which are illustrated in FIG. 4.

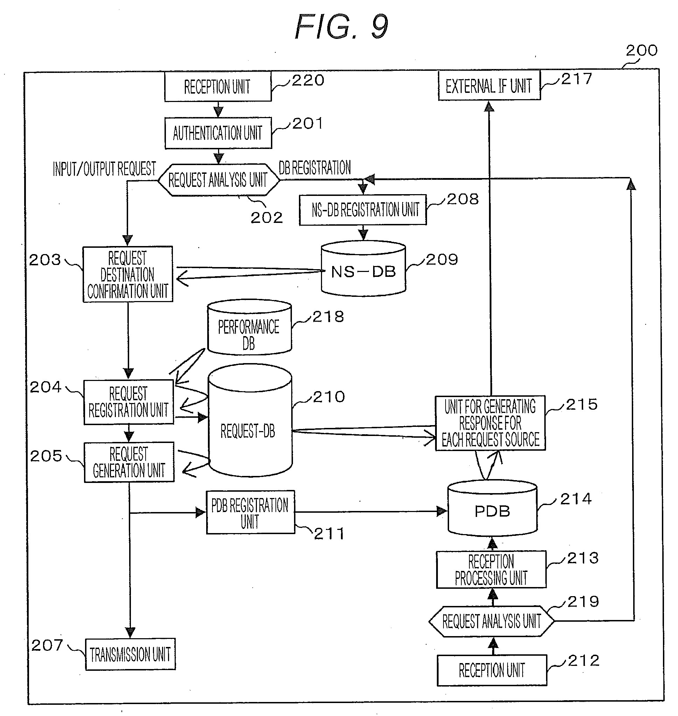

With reference to FIG. 9, a configuration of the GW device 200 will be described. In FIG. 9, the GW device 200 includes an authentication unit 201, a request analysis unit 202, a request destination confirmation unit 203, a request authentication registration unit 204, a request generation unit 205, a transmission unit 207, a name system DB (NS-DB) registration unit 208, an NS-DB 209, a request-DB 210, a process database (PDB) registration unit 211, a reception unit 212, a reception processing unit 213, a PDB 214, a unit for generating a response for each request source 215, an external IF unit 217, a performance DB 218, a request analysis unit 219, and a reception unit 220.

The reception unit 220 receives the request message A from the LAN 800. The request analysis unit 202 analyzes the request message A. The request destination confirmation unit 203 acquires, from a data name indicated in a request in the request message A, a device of a request destination viewed from the GW device 200. The request authentication registration unit 204 registers, to a request-DB 210, from which HMI device 100 the request message A is requested, to which controller 300 the request message A is requested, and to which data in the controller 300 the request message A is requested. The request generation unit 205 confirms whether a request is registered in the request-DB 210. If the request is registered, the request generation unit 205 generates the request message B corresponding to a request destination device. The transmission unit 207 transmits the request message B to the control monitoring LAN 900.

The authentication unit 201 manages in which device and to which address in the device the NS-DB 209 stores a name of data desired to be written, and manages an attribute of the name of data desired to be written. The authentication unit 201 determines whether the request message A should be authenticated, and deletes the request message A not to be authenticated. The determination whether to authenticate the request message A by the authentication unit 201 is determined by whether the request message A corresponds to a combination, which is set in advance, among the request source device name 812 of the request message A, the name of data desired to be written 814, the name of data desired to be acquired 815, and the name of a data set desired to be acquired 817.

The request-DB 210 manages a request to the controller 300 and the sensor 600 and manages from which HMI device 100 the request is requested. The PDB registration unit 211 registers a data set name 2142 and a data name included in a data item 2143 to the PDB 214 from the request message A. Further, the PDB registration unit 211 registers a request destination 2141 to the PDB 214 from the request message B.

The performance DB 218 stores maximum processing performance of the controller 300, the sensor 600, and the control monitoring LAN 900. The request analysis unit 219 analyzes whether a message from a controller is a message from the acquired signal notification unit 328 or a message from the response generation unit 324. In the case of a message from the acquired signal notification unit 328, the request analysis unit 219 passes the message to the NS-DB registration unit 208.

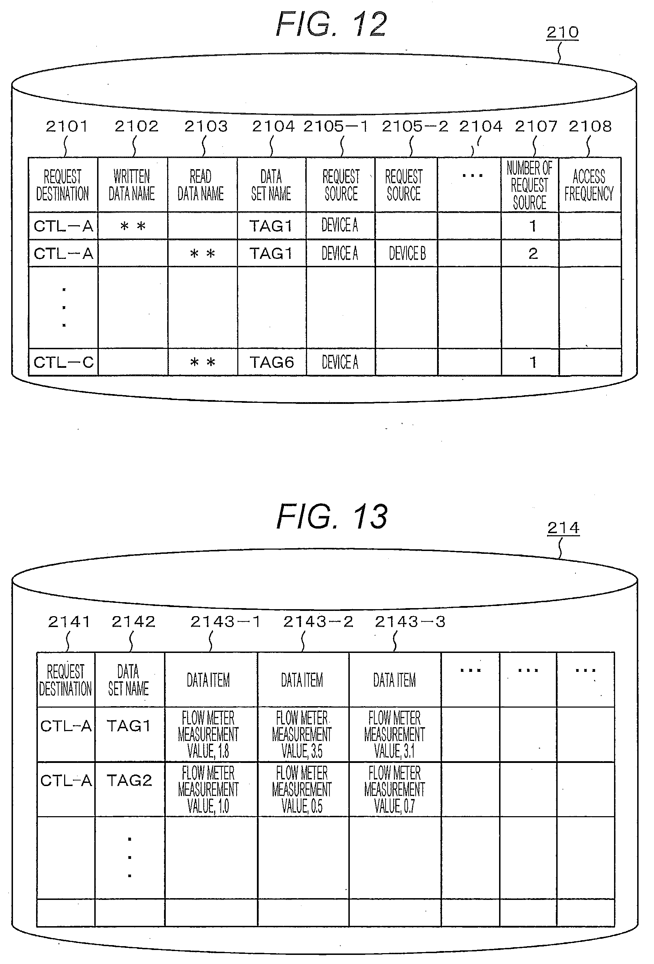

The PDB 214 records data received by the GW device 200 from the controller 300 and the sensor 600. The reception unit 212 receives, from the control monitoring LAN 900, a response from the controller 300 or the sensor 600. The reception processing unit 213 processes a response and stores necessary data in the PDB 214. The unit for generating a response for each request source 215 acquires a request source, which should respond to a response, from a request source 2105 (to be described with reference to FIG. 12) of the request-DB 210, reads necessary data from a write data name 2102 and a read data name 2103 from the PDB 214, and generates a response corresponding to the request source. The external IF unit 217 transmits a response to the LAN 800. The NS-DB registration unit 208 registers a signal list table 818 to the NS-DB 209 if a request message is a DB registration request as a result of analyzing in the request analysis unit 202.

The request analysis unit 202 analyzes whether a request message is an input/output request or DB registration by whether a signal list table 3310 is included in the signal list table 818 of the request message A.

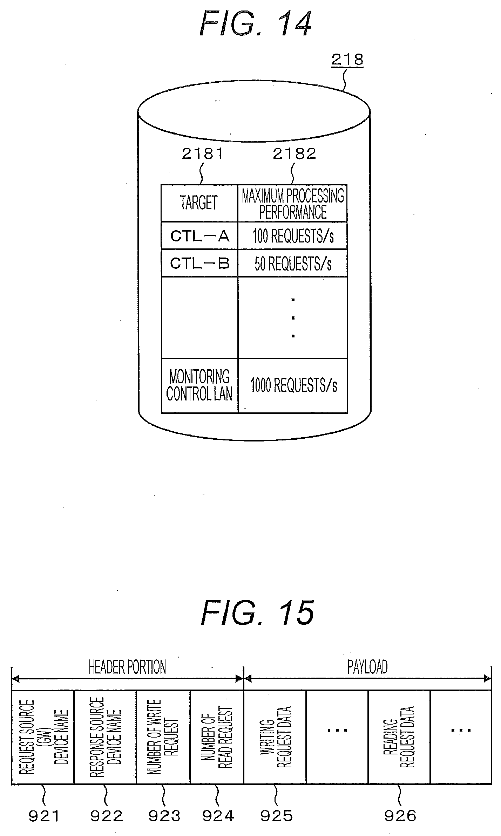

The request authentication registration unit 204 may refuse registration based on the request source device name 812 of a request message, the name of data desired to be written 814, the name of data desired to be acquired 815, and the name of a data set desired to be acquired 817, which are a requested data name, and the access frequency 816, instead of unconditionally registering a request message to the request DB 210. The request authentication registration unit 204 aggregates the access frequencies 2108 from each line of the request-DB 210 for each of the controller 300 and the sensor 600 appointed by a request destination 2101, and the determination whether to refuse registration is determined by whether an aggregate result exceeds a maximum processing performance 2182 corresponding to a target 2181 of a performance DB 218 (to be described in FIG. 14). In this case, a NACK response message is returned in response to the request message A.

In the case where each of the name of data desired to be acquired 815 and the name of a data set desired to be acquired 817 of the request message A are already registered to the read data name 2103, and the data set name 2104, and the access frequency 816 is rougher than the access frequency 2108, the request generation unit 205 merely registers a request message to the request-DB 210, instead of request generation, to reduce requests to the controller 300. Whether the access frequency 816 is rougher than the access frequency 2108 is specifically determined by whether the access frequency 2108 is an integer time of the access frequency 816, such as when the access frequency 2108 is at one second intervals, the access frequency 816 is at three second intervals.

The unit for generating a response for each request source 215 generates a response message by data stored in the PDB 214 regardless of a response state of a response message from the controller 300. Therefore, even in the case where a system configuration is changed, and the controller 300 is deleted, a communication error does not occur, an initial value does not become a response message, and the last data measured by the controller 300 becomes a response message.

Further, in the case where a request data name 2091 includes a type or a specification of data and a signal for writing and acquiring such as a data schemer specified in an XML format and IEC61850, the request generation unit 205 and the unit for generating a response for each request source 215 change a type and a specification appointed in response to a request message or a response message

Furthermore, the request analysis unit 202, the request authentication registration unit 204, and the unit for generating a response for each request source 215 may analyze multiple protocols of such as the IEC61850 and generate a response message. The IEC61850 includes Read and Write services (messages) corresponding to requested reading/writing. A request destination is appointed under the name of a reference name. The Read and Write services (messages) are realized by transmitting and receiving a request message and a response message as with the example described herein. Therefore, it is considered that only a message format is different.

Therefore, a configuration of the example described herein can be realized by adding a data name to the request data name 2091 of the NS-DB 209 and the write data name 2102 of the request-DB 210 and setting a protocol type as a name when requested and a name of the protocol such as a reference name in the protocol.

In addition to a request destination (GW) device name 811 and a request source device name 812 which have a structure of a message indicated in FIG. 6, a DB registration request includes the request data name 2091, a request destination device 2092, a request name 2093, a type 2094, the division 2095, and a classification 2096 in FIG. 11 to be described later.

With reference to FIG. 10, the request message B will be described which is transmitted by the GW device 200 to the controller 300 and the sensor 600. In FIG. 10, the request message B includes a header portion and a payload. The header portion of the request message B includes a request destination device name 911, a request source (GW) device name 912, the number of writing requests 913, and the number of reading requests 914.

The request destination device name 911 is a device name of a transmission destination of the request message B. The request source (GW) device name 912 is a device name of a transmission source. The number of writing requests 913 is the number of writing requests included in a request message. The number of reading requests 914 is the number of reading requests included in a request message.

The payload of the request message B includes the writing request data address 915, the reading request data address 916, and an authentication HMI device name 917. The writing request data address 915 is an address of a device in which data desired to be written is written. The reading request data address 916 is an address of a device in which data desired to be read is read. The authentication HMI device name 917 stores an HMI device name which may process a request used in a third embodiment. In the payload, an access frequency (period) may be included as with the request message A.

With reference to FIG. 11, the NS-DB 209 will be described which manages specifically in which device and to which address in the device the GW device 200 stores the name of data desired to be written 814 and manages an attribute of the name of data desired to be written 814. In FIG. 11, the NS-DB 209 includes the request data name 2091, the request destination device 2092, and a data set name 2097, the request name 2093, the type 2094, the division 2095, and the classification 2096.

The request data name 2091 is an identifier to be used in the name of data desired to be written 814 and the name of a data set desired to be acquired 817. The request destination device 2092 indicates such as the controller 300 and the sensor 600 including data corresponding to the request data name 2091. The data set name 2097 is an identifier for appointing multiple data per unit. The request name 2093 is an identifier viewed from the request destination device 2092 of data. The type 2094 is a type of data. The division 2095 indicates whether data is readable or readable and writable. The classification 2096 indicates a specific access method, such as that an identifier of the request name 2093 is an address of a main memory, indicates a bit position in addition to the address, or is a logical name.

Further, the request data name 2091 may include a type and a specification of data and a signal for writing and acquiring, such as an XML format appointed in the request message A and a data scheme specified in the IEC61850 The NS-DB may be called a name database.

With reference to FIG. 12, the request-DB 210 will be described which manages a request to the controller 300 and the sensor 600 from the GW device 200 and from which HMI device 100 the request is requested. In FIG. 12, the request-DB 210 includes the write data name 2102, the read data name 2103, the read data set name 2104, the request source 2105, the number of request sources 2107, and the access frequency 2108.

The request destination 2101 indicates the controller 300 which includes data requested in the request message A. The write data name 2102 stores the writing request data address 915 included in the request message B. The read data name 2103 stores the reading request data address 916 included in the request message B. The read data set name 2104 stores the name of a data set desired to be acquired 817 in the case where the request message A is appointed under the name of a data set desired to be acquired 816. The request source 2105 stores the request source device name 812 of the request message A.

The request authentication registration unit 204 searches every line corresponding to the data set name 2097 of the NS-DB 209 and registers them in the request-DB 210 in the case where the name of a data set desired to be acquired 817 is appointed to a request in the request message A.

With reference to FIG. 13, the PDB 214 will be described which stores contents of the writing request data 925 and the reading request data 926 which are stored in the response message B received by the GW device 200 from the controller 300 or the sensor 600. In FIG. 13, the PDB 214 includes the request destination 2141, the data set name 2142, and a data item 2143.

The request destination 2141 identifies the controller 300 or the sensor 600 which has acquired data. The data set name 2142 identifies a name of a data set which collectively acquires a plurality of data. The data item 2143 is a name and a value of data. A plurality of the data items 2143 may be included.

With reference to FIG. 14, the performance DB 218 will be described which stores a maximum processing performance of the controller 300, the sensor 600, and the control monitoring LAN 900 in the case where the GW device 200 rejects the request message A based on the access frequency 816. In FIG. 14, the target 2181 and the performance DB 218 include the maximum processing performance 2182.

The target 2181 identifies a management target. The maximum processing performance 2182 is maximum processing performance of a management target. In the case of the controller 300 or the sensor 600, the target 2181 stores a request destination device name and a name indicating the control monitoring LAN 900. In the case of a system including the multiple control monitoring LANs 900, a correspondence table of a request destination device name and the control monitoring LAN 900 is prepared, and the correspondence table is referred to determine from a request destination device name which control monitoring LAN 900 is targeted. The maximum processing performance 2182 stores the number of requests per unit time. The maximum processing performance 2182 may be finer expression than the number of requests per unit time. Specifically, the maximum processing performance 2182 may be different depending on writing, reading, and read data name or may be a length of the request message B and the response message B. Further, it may be different depending on a time. Specifically, the maximum processing performance may be different between for the initial two seconds and for the later eight seconds in a ten second period.

With reference to FIG. 15, the response message B will be described which is responded to the GW device 200 by the controller 300 or the sensor 600. In FIG. 15, the response message B includes a header portion and a payload.

The header portion of the response message B includes a request source (GW) device name 921, a response source device name 922, the number of writing requests 923, and the number of reading requests 924. The request source (GW) device name 921 is a name of a device which has requested the response message B. The response source device name 922 is a name of the device which has responded to the response message B. The number of writing requests 923 is the number of writing requests included in the response message B. The number of reading requests 924 is the number of reading requests included in the response message B.

The payload of the response message B includes the writing request data 925 and the reading request data 926. The writing request data 925 is data stored in the writing request data address 915 which is read after the requested writing request data address 915 is processed. The reading request data 926 is data stored in the reading request data address 916.

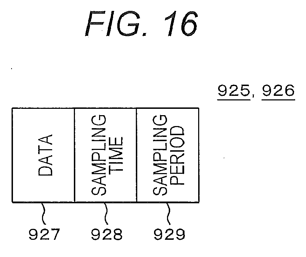

With reference to FIG. 16, specific contents of the response message B data will be described. In FIG. 16, the writing request data 925 and the reading request data 926 include data 927, a sampling time 928, and a sampling period 929.

The data 927 is data corresponding to a data name such as the name of data desired to be acquired 815. The sampling time 928 is a time at which the data 927 is acquired. The sampling period 929 is a period in which the data 927 is acquired.

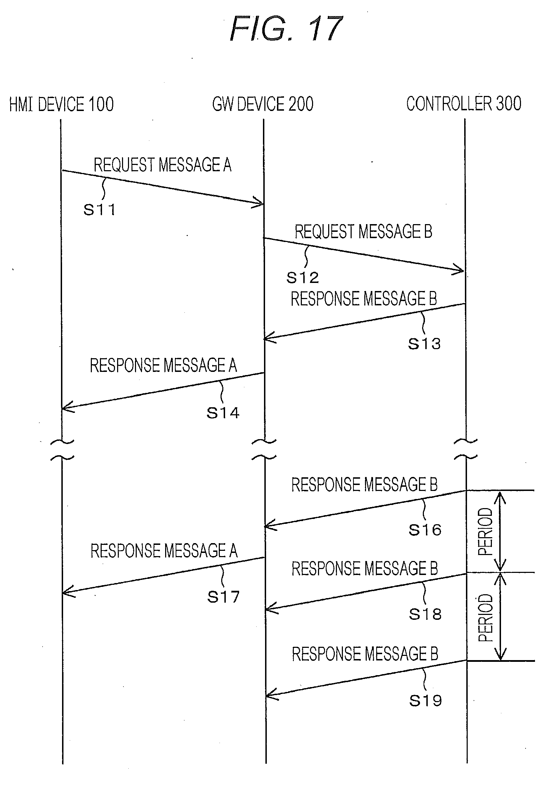

With reference to FIG. 17, a general process sequence among an HMI device, a GW device, and a controller will be described. The controller can be replaced by a sensor. Further, the sequence period becomes longer after each step number in comparison with before the step number.

In FIG. 17, the HMI device 100 transmits the request message A to the GW device 200 (S11). A period of the response message A is included in the request message A. The GW device 200 which has received the request message A transmits the request message B to the controller 300 (S12). A period of the response message B is included in the request message B. The controller 300 which has received the request message B transmits the response message B to the GW device 200 (S13). The GW device 200 which has received the response message B transmits the response message A to the HMI device 100 (S14).

The controller 300 transmits the response message B to the GW device 200 (S16). The GW device 200 transmits the response message A to the HMI device 100 (S17). The controller 300 transmits the response message B to the GW device 200 (S18). The controller 300 transmits the response message B to the GW device 200 (S19). An interval between step 16 and step 18 and an interval step 18 and step 19 are equal and a period notified in step 12. Further, an interval between step 17 and the next response message A is a period notified in step 11.

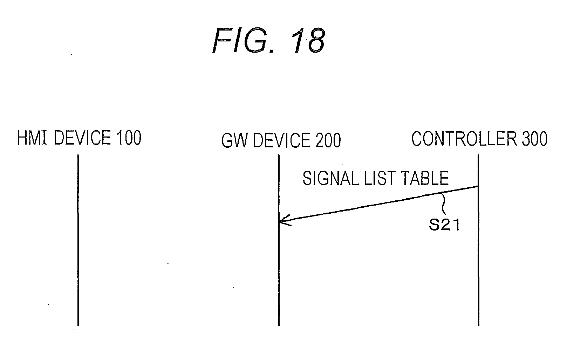

With reference to FIG. 18, a start-up process sequence between a GW device and a controller will be described. The controller can be replaced by a sensor. In FIG. 18, the controller 300 transmits a signal list table to the GW device 200 when a system is started up (S21). The HMI device 100 acquires a signal list table from a host system.

The examples have been specifically described above. However, the present invention is not limited to the examples and can be changed variously without departing from the gist of the invention.

According to another embodiment 1, two or more control monitoring systems illustrated in FIG. 1 are cooperated in a control monitoring system communication method. Therefore, a plurality of the HMI devices 100 and a plurality of the GW devices 200 are connected by the same LAN 800. A plurality of the controllers 300 is connected by the same control monitoring LAN 900. The GW devices 200 register the NS-DB 209 included in the other GW devices 200 by a DB registration message described in the NS-DB registration unit 208 and transmits a request message to the controller 300 included in the other GW device 200.

Further, according to another embodiment 2, a control monitoring system includes a communication passage other than the GW device 200 in which the LAN 800 can be replaced by the control monitoring LAN 900 so that the HMI device 100 can directly communicate with the controller 300. The HMI device 100 also includes the NS-DB 209 and the request-DB 210. The request destination confirmation unit 203 and the request generation unit 205 are processed between the request generation unit 102 and the transmission unit 103, and the HMI device 100 directly transmits a request to the controller 300 and receives a response.

Furthermore, according to another embodiment 3, in addition to the second embodiment, in a control monitoring system, the request destination confirmation unit 203 of the GW device 200 is registered in the request-DB 210. At the same time, the request generation unit 205 stores an arbitrary combination among the request source device name 812, a writing request data address, and a reading request data address in the authentication HMI device name 917, and the control monitoring system notifies of the controller 300 whether the HMI device 100 can access to the controller 300.

In addition, in a control monitoring system according to another embodiment 4, the controller 300, instead pf the HMI device 100, transmits the request message A to the GW device 200. In this configuration, the controller 300 includes the request generation unit 102, the transmission unit 103, the reception unit 105, and the reception processing unit 104. The reception processing unit 104 has a function to update the memory 330 instead of update of the display DB 106. The controller 300 transmits the request message A and receives the response message A as processing in the control monitoring arithmetic unit 321 and can access to data in other controller. In the reception unit 220 of the GW device 200, the control monitoring LAN 900 has a transmission and reception function in addition to the LAN 800, and receives the request message A from the controller 300 and transmits the response message A.

According to another embodiment 5, a server is included as a controlled device. For example, by being combined with the fourth embodiment, the controller 300 can access to data in the server. A server in this case includes, in a functional block illustrated in FIG. 2, the reception unit 327, the reception analysis unit 326, the authentication unit 328, the authentication DB 329, the request analysis unit 325, the response generation unit 324, the memory 330, and the transmission unit 323. In the embodiment, the server is called a controlled device.

In another embodiment 6, the GW device 200 is incorporated in the controller 300. In this configuration, the controller 300 communicate via the GW device 200 which is always incorporated.

### Reference Signs List

- 100: HMI device
- 101: request analysis unit
- 102: request generation unit
- 103: transmission unit
- 104: reception processing unit
- 105: reception unit
- 106: display DB
- 107: display update unit
- 108: acceptance unit
- 109: external IF unit
- 200: GW device
- 201: authentication unit
- 202: request analysis unit
- 203: request destination confirmation unit
- 204: request authentication registration unit
- 205: request generation unit
- 207: transmission unit
- 208: name system database (NS-DB) registration unit
- 209: NS-DB
- 210: request-DB
- 211: process DB (PDB) registration unit
- 212: reception unit
- 213: reception processing unit
- 214: PDB
- 215: unit for generating response for each request source
- 217: external IF unit
- 218: performance DB
- 219: request analysis unit
- 220: reception unit
- 300: controller
- 310: AI(Analog Input)
- 311: DI(Digital Input)
- 312: AO(Analog Output)
- 313: DO(Digital Output)
- 320: process input unit
- 321: control monitoring arithmetic unit
- 322: process output unit
- 323: transmission unit
- 324: response generation unit
- 325: request analysis unit
- 326: reception analysis unit
- 327: reception unit
- 328: authentication unit
- 329: authentication database (DB)
- 330: memory (work data unit)
- 400: control monitoring system
- 600: sensor
- 800: LAN
- 900: control monitoring LAN

## Claims

1. A control monitoring system, comprising:
a server device or a controller device configured to receive a command;
a gateway device connected to the server device or the controller device and configured to generate a second request message based on a first request message from the server device or the controller device; and
a controlled device connected to the gateway device via a control monitoring network and configured to generate a second response message based on the second request message when receiving the second request message from the gateway device, the gateway device comprising:
a request database configured to record a relation between a request source server and a request destination controlled device; and
a process database configured to record data received from the controlled device,
**characterized in that** the gateway device records the second response message in the process database when receiving the second response message from the controlled device, refers to the request database, searches a corresponding server device or controller device, generates a first response message addressed to the searched server device or controller device, and transmits the first response message to the searched server device or controller device.

2. The control monitoring system, according to Claim 1, **characterized in that** each of the first request message and the second request message includes a first period and a second period, the gateway device sends the first response message in the first period, and the controlled device sends the second response message in the second period.

3. The control monitoring system, according to Claim 1, **characterized in that** the gateway device further comprises a name database configured to manage an address and an attribute of the controlled device, refers to the name database, and determines whether a message is an input/output request.

4. The control monitoring system according to Claim 1, **characterized in that** the gateway device further comprises a performance database configured to store processing performance of the controlled device or the control monitoring network, refers to the performance database, and rejects the first request message.

5. A control monitoring method in a control monitoring system, the control monitoring system comprising:
a server device or a controller device configured to receive a command;
a gateway device connected to the server device or the controller device and configured to generate a second request message based on a first request message from the server device or the controller device; and
a controlled device connected to the gateway device via a control monitoring network and configured to generate a second response message based on the second request message when receiving the second request message from the gateway device, the gateway device comprising:
a request database configured to record a relation between a request source server or a controller device and a request destination controlled device; and
a process database configured to record data received from the controlled device,
the control monitoring method comprising the steps of:
recording the second response message in the process database when the second response message is received from the controlled device;
referring to the request database and searching a corresponding server device or controller device;
generating a first response message addressed to the searched server device or controller device; and
transmitting the generated first response message to the searched server device or controller device.
